# EUROPEAN PATENT APPLICATION

(11) **EP 4 749 180 A1**
(43) Date of publication of application: **27.05.2026**
(21) Application number: 25215866.2
(22) Date of filing: 14.11.2025
(51) Int. Cl.: F21S 43/14, F21S 43/15, F21S 43/19, F21S 43/20, B62J 6/05, G02B 3/08

(54) **VEHICLE LIGHTING FIXTURE**

(30) Priority: 26.11.2024 JP 2024205080
(71) Applicant: Mitsuba Corporation, Kiryu-shi, Gunma 376-8555 (JP)
(72) Inventor: YAMAOKA, Yasushi, Kiryu-shi, Gunma, 376-8555 (JP)
(74) Representative: Winter, Brandl - Partnerschaft mbB

(57) **Abstract**

The disclosure provides a vehicle lighting fixture (10) capable of obtaining stipulated photometric property without increasing size. A substrate (50) mounting a linear array of first to fourth light sources (D1~D4), and a lens (40) having an opposing surface (41a) facing the first to fourth light sources (D1~D4), are provided, wherein the opposing surface (41a) has first to fourth Fresnel lens parts (61~64) facing respectively the first to fourth light sources (D1~D4), and a straight lens part (70) provided to extend across the first to fourth Fresnel lens parts (61~64), and the straight lens part (70) is disposed on both sides of a base line (BL), with the base line (BL) passing through centers of the first to fourth Fresnel lens parts (61~64) as a center.

## Description

### BACKGROUND

### Technical Field

The disclosure relates to a vehicle lighting fixture.

### Description of Related Art

Patent Document 1 describes a turning signal indicator having an elongated shape with the vehicle width direction as the longitudinal direction. The turning signal indicator described in Patent Document 1 includes a base part, a pair of first, and second light sources, and a lens covering these first and second light sources. The pair of first and second light sources are sequentially controlled to light up by a control unit.

### Patent Documents

[Patent Document 1] Japanese Patent Laid-Open No. 2021-054187

### SUMMARY

Incidentally, automotive regulations such as United Nations rules (United Nations (UN) standard) stipulate photometric requirements for turning signal indicators. Specifically, turning signal indicators are stipulated to have light distribution that spreads in the horizontal direction (light distribution that is flat in the vertical direction). However, in the case of simply changing the light distribution surface of the turning signal indicator to obtain the stipulated light distribution property that spreads in the horizontal direction, enlargement of the turning signal indicator in the horizontal direction is unavoidable. Therefore, there have been issues such as deterioration of the design characteristics of the turning signal indicator.

An object of the disclosure is to provide a vehicle lighting fixture that can obtain stipulated light distribution property without enlargement.

In one aspect of the disclosure, the vehicle lighting fixture includes a substrate, mounting a linear array of a plurality of light sources; and a lens member, having an opposing surface facing the light sources, wherein the opposing surface comprises a plurality of Fresnel lens parts, each of the Fresnel lens parts faces a respective light source of the plurality of light sources; and a straight lens part, the straight lens part is provided to extend across at least an adjacent pair of the Fresnel lens parts among the plurality of Fresnel lens parts, wherein the straight lens part is disposed on at least one side of a base line, with the base line passing through centers of the plurality of Fresnel lens parts as a center.

According to the disclosure, it is possible for a vehicle lighting fixture to obtain stipulated light distribution property without enlargement.

### BRIEF DESCRIPTION OF THE DRAWINGS

FIG. 1 is a view of a winker lamp as seen from the front of a lens.
FIG. 2 is a view taken in the direction of arrow A in FIG. 1.
FIG. 3 is a cross-sectional view taken along line B-B in FIG. 1.
FIG. 4 is a perspective view of a lens as seen from the opposing surface side.
FIG. 5 is a plan view of a lens as seen from the opposing surface side.
FIG. 6 is a cross-sectional view taken along line C-C in FIG. 5.
FIG. 7 is an enlarged view of the dashed circle D portion in FIG. 6.
FIG. 8 is a cross-sectional view taken along line E-E in FIG. 5.
FIG. 9 is an enlarged view of the dashed circle F portion in FIG. 8.
FIG. 10 is image data showing a light emission state of a lens.
FIG. 11 is a diagram showing a light distribution state of [embodiment].
FIG. 12 is a diagram showing a light distribution state of [comparative example].
FIG. 13 is a diagram showing photometric property defined by United Nations rule.

### DESCRIPTION OF THE EMBODIMENTS

Hereinafter, one embodiment of the disclosure will be described in detail using the drawings.

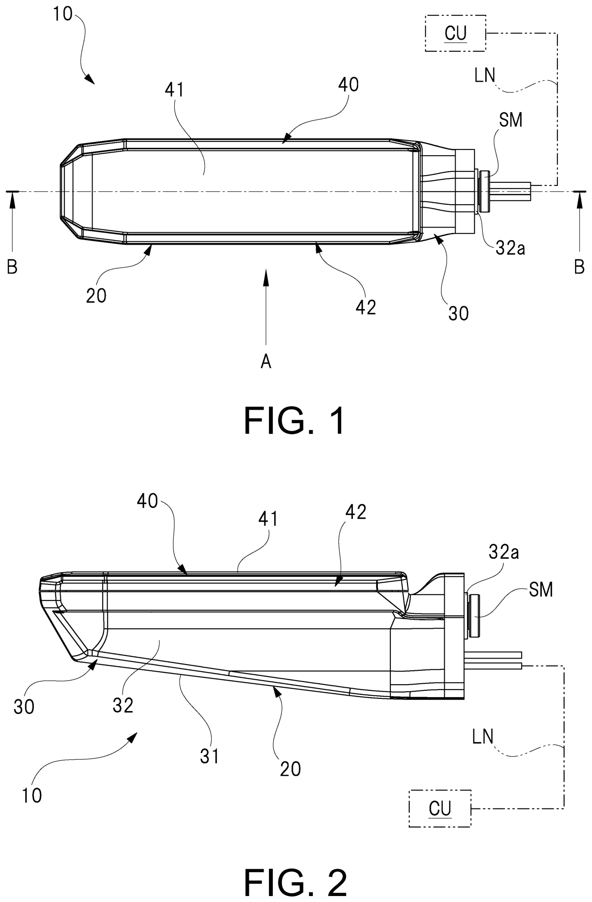

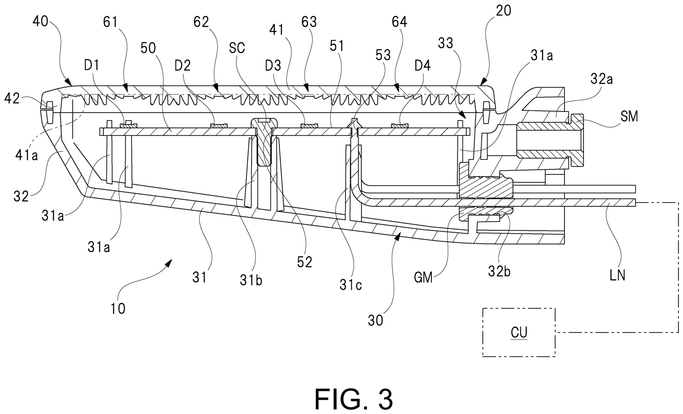

FIG. 1 shows a diagram of the winker lamp viewed from the front of the lens, FIG. 2 shows a view in the direction of arrow A in FIG. 1, and FIG. 3 shows a cross-sectional view along line B-B in FIG. 1.

### <Overview of Winker Lamp>

The winker lamp 10 shown in FIG. 1 to FIG. 3 is mounted on the left and right sides at the front and rear of a motorcycle. Specifically, the winker lamp 10 is fixed to cowl stays provided at the front, rear, left, and right of the motorcycle via support members SM. The winker lamp 10 corresponds to the vehicle lighting fixture in the disclosure.

### <Housing>

As shown in FIG. 1 to FIG. 3, the winker lamp 10 includes a hollow housing 20 that forms its outer shell. The housing 20 extends elongated in the vehicle width direction of the motorcycle (left-right direction in the figure) and is formed in a substantially rod shape. The housing 20 includes a housing body 30 made of an opaque black plastic material, and a lens 40 made of a transparent and hard plastic material.

### <Housing Body>

The housing body 30 has an opening on the side where the lens 40 is disposed (upper side in FIG. 2 and FIG. 3) and is formed in a substantially box shape. The housing body 30 includes a housing bottom wall 31 that faces the lens 40, and a housing side wall 32 that protrudes from the housing bottom wall 31 toward the lens 40 is integrally provided at the periphery of the housing bottom wall 31. An opening part 33 is provided on the side of the housing side wall 32 where the lens 40 is disposed, and the opening part 33 is sealed by the lens 40.

As shown in FIG. 3, the housing bottom wall 31 is integrally provided with multiple substrate support columns 31a, a single screw fixing column 31b, and a single wiring holding post 31c. The multiple substrate support columns 31a support the substrate 50 without rattling. A fixation screw SC for fixing the substrate 50 to the housing body 30 is screwed to the single screw fixing column 31b. The single wiring holding post 31c holds wiring LN that supplies drive current to the substrate 50.

Additionally, the housing side wall 32 is provided with a fixed cylinder part 32a to which a support member SM fixed to a cowl stay is fixed, and a wiring insertion hole 32b that is disposed in the vicinity of the fixed cylinder part 32a and through which the wiring LN is inserted via a grommet GM. The fixed cylinder part 32a and the wiring insertion hole 32b are respectively disposed on the vehicle width direction inner side (right side in the figure) of the housing body 30.

### <Substrate>

As shown in FIG. 3, the substrate 50 accommodated inside the housing 20 is formed of a substantially rectangular flat plate and adopts a PCB (Printed Circuit Board) with conductor wiring printed on the surface. A mounting surface 51 is provided on the side of the substrate 50 where the lens 40 is disposed (upper side in FIG. 3). Multiple (total of four) first to fourth light sources D1~D4 are mounted on the mounting surface 51, and these first to fourth light sources D1~D4 are aligned in a line at equal intervals in the longitudinal direction of the substrate 50, that is, in the vehicle width direction. The first to fourth light sources D1~D4 are LEDs (Light Emitting Diodes) and are electrically connected to printed wiring (not shown) on the mounting surface 51.

Additionally, one end in the longitudinal direction of the wiring LN is electrically connected to the printed wiring of the mounting surface 51. In contrast, the other end in the longitudinal direction of the wiring LN is electrically connected to the vehicle controller CU. Thereby, the first to fourth light sources D1~D4 mounted on the mounting surface 51 of the substrate 50 emit light by supply of drive current from the vehicle controller CU. The vehicle controller CU is capable of various controls such as simultaneously blinking the first to fourth light sources D1~D4 at constant intervals, or sequentially lighting them in the order of the fourth to first light sources D4 to D1, for example.

Furthermore, a single screw insertion hole 52 is provided in the longitudinal direction central part of the substrate 50. A fixation screw SC that is screwed to the screw fixing column 31b is inserted through the screw insertion hole 52. Additionally, a through hole 53 having a smaller diameter than the screw insertion hole 52 is provided in the vicinity of the screw insertion hole 52 in the longitudinal direction of the substrate 50. One end in the longitudinal direction of the wiring LN is electrically connected to the through hole 53 by soldering or the like.

### <Lens>

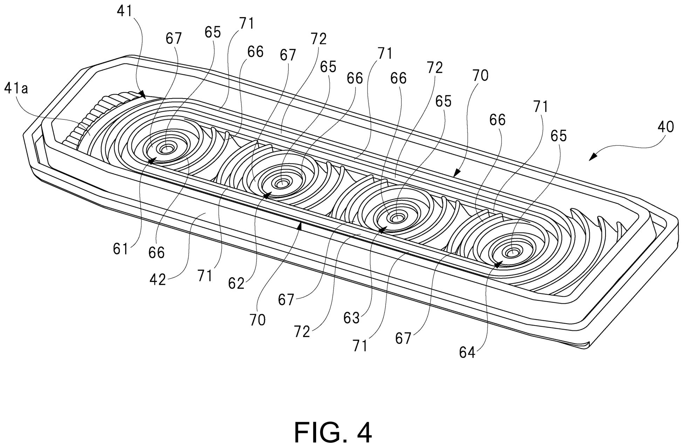

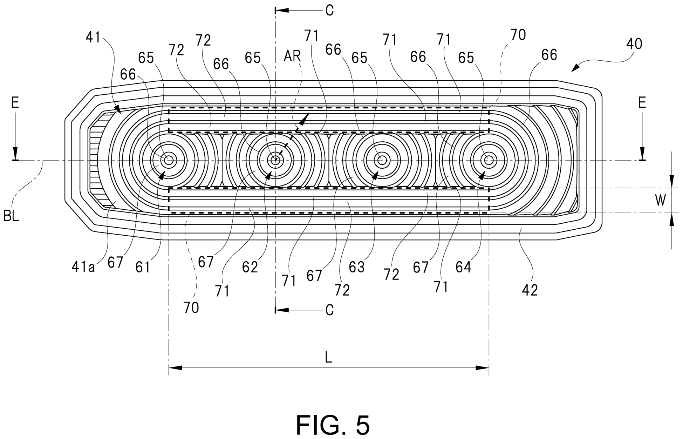

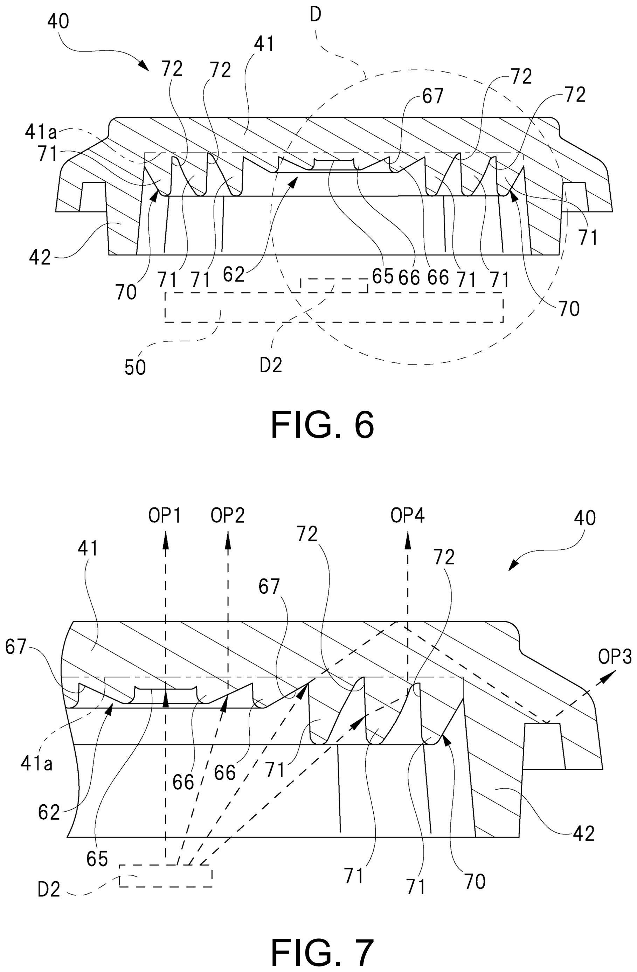

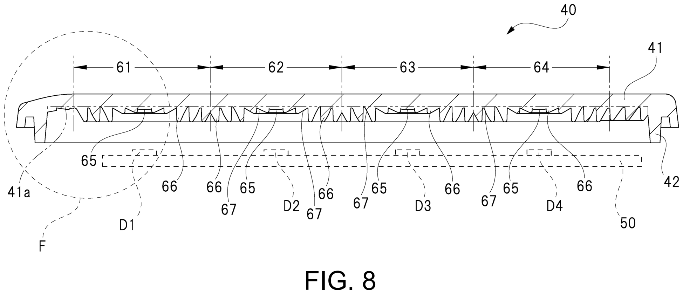

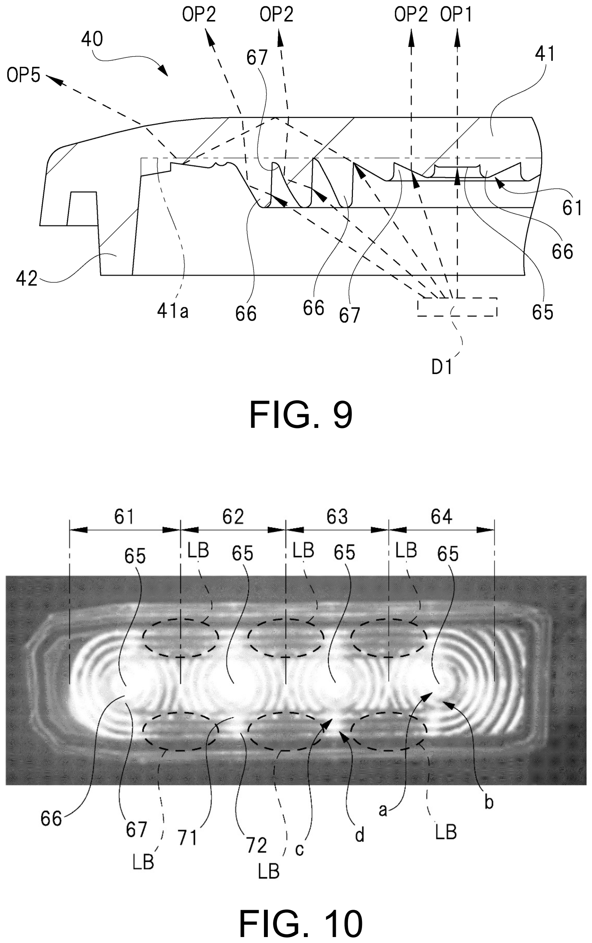

FIG. 4 is a perspective view of the lens viewed from the opposing surface side, FIG. 5 is a plan view of the lens viewed from the opposing surface side, FIG. 6 is a cross-sectional view along line C-C of FIG. 5, FIG. 7 is an enlarged view of the dashed circle D portion of FIG. 6, FIG. 8 is a cross-sectional view along line E-E of FIG. 5, and FIG. 9 is an enlarged view of the dashed circle F portion of FIG. 8.

As shown in FIG. 3 to FIG. 5 and FIG. 8, the lens 40 is formed in a substantially rectangular flat plate shape and is disposed facing the first to fourth light sources D1~D4 mounted on the substrate 50. Specifically, the lens 40 is disposed on the light projection side (upper side in FIG. 3) of the first to fourth light sources D1~D4. Accordingly, light from the first to fourth light sources D1~D4 passes through the lens 40, and the light emission state of the first to fourth light sources D1~D4 can be recognized from outside the lens 40. The lens 40 corresponds to the lens member in the disclosure.

The lens 40 includes a flat plate-shaped lens body 41. Further, on the housing body 30 side (lower side in FIG. 3) of the lens body 41, an opposing surface 41a is provided that faces the first to fourth light sources D1~D4 in the light projection direction of the first to fourth light sources D1~D4.

Further, a lens sidewall 42 that protrudes from the lens body 41 toward the housing body 30 is integrally provided at the periphery of the lens body 41. The tip side (lower side in FIG. 3) of the lens sidewall 42 is welded to the tip side (upper side in FIG. 3) of the housing side wall 32 by an infrared welding machine or the like. Accordingly, the opening part 33 is sealed by the lens 40, and entry of rainwater, dust, and the like into the interior of the housing 20 is prevented.

The fixing of the lens 40 and the housing body 30 is not limited to welding by an infrared welding machine, and other fixing methods such as fixing with adhesive or ultrasonic welding may be adopted. That is, as long as the opening part 33 can be sealed with the lens 40, these fixing methods are not limited.

### <Fresnel Lens Part>

As shown in FIG. 4 and FIG. 5, multiple (four in total) first to fourth Fresnel lens parts 61~64 are provided on the opposing surface 41a of the lens body 41 so as to be arranged in the longitudinal direction of the lens body 41. Specifically, as shown in FIG. 8, the first Fresnel lens part 61 is disposed facing the front of the first light source D1, the second Fresnel lens part 62 is disposed facing the front of the second light source D2, the third Fresnel lens part 63 is disposed facing the front of the third light source D3, and the fourth Fresnel lens part 64 is disposed facing the front of the fourth light source D4. Accordingly, the first to fourth Fresnel lens parts 61~64 can emit light with high brightness by the first to fourth light sources D1~D4, respectively.

In this way, by providing the first to fourth Fresnel lens parts 61~64, which are thinner than convex lenses, on the lens body 41 instead of providing multiple thick convex lenses, it is possible to deliver strong light across long distances while suppressing weight increase of the lens body 41, thereby enhancing visibility.

The first to fourth Fresnel lens parts 61~64 each include a lens central part 65 that faces the first to fourth light sources D1~D4, respectively. Additionally, the first to fourth Fresnel lens parts 61~64 each include concentric and multiple annular and arc-shaped protrusion parts 66 having different diameter dimensions centered on the respective lens central part 65. Furthermore, the first to fourth Fresnel lens parts 61~64 each include concentric and multiple annular and arc-shaped recess parts 67 having different diameter dimensions centered on the respective lens central part 65. These protrusion parts 66 and recess parts 67 are alternately arranged in the radial direction of the first to fourth Fresnel lens parts 61~64.

### <Straight lens part>

Additionally, as shown in FIG. 4 and FIG. 5, a pair of straight lens parts 70 extending in the longitudinal direction of the lens body 41 are provided on the opposing surface 41a of the lens body 41. Specifically, the pair of straight lens parts 70 are provided in portions surrounded by dashed lines in FIG. 5, and are disposed so as to overlap the outer peripheral portions of the first to fourth Fresnel lens parts 61~64. Here, the straight lens parts 70 are provided parallel to a base line BL (see FIG. 5) passing through the respective centers of the first to fourth Fresnel lens parts 61~64, and are disposed on both sides (upper and lower sides in the figure) with the base line BL as the center. That is, the pair of straight lens parts 70 are disposed so as to be mirror images with respect to the base line BL.

The straight lens parts 70 are provided to extend from a furthest end of one side of the first Fresnel lens part 61 to a furthest end of the other side of the fourth Fresnel lens part 64 in the arrangement direction of the first to fourth Fresnel lens parts 61~64 (the longitudinal direction of the lens body 41). Furthermore, the straight lens parts 70 are disposed closer to the central portions of the first to fourth Fresnel lens parts 61~64 than to the outermost peripheral portions of the first to fourth Fresnel lens parts 61~64, that is, the straight lens parts 70 are provided so as to cut into the vicinity of the lens central parts 65 of the first to fourth Fresnel lens parts 61~64.

Here, the length dimension L of the straight lens part 70 along the longitudinal direction of the lens body 41 is substantially equal to the distance from the lens central part 65 of the first Fresnel lens part 61 to the lens central part 65 of the fourth Fresnel lens part 64. Additionally, the width dimension W of the straight lens part 70 along the lateral direction of the lens body 41 is substantially equal to the distance from the protrusion part 66 disposed at the outermost peripheral portion of the first to fourth Fresnel lens parts 61~64 to the protrusion part 66 disposed as the third one toward the radially inward side thereof.

The straight lens part 70 includes a total of three linear protrusion parts 71 protruding from the opposing surface 41a of the lens body 41 toward the first to fourth light sources D1~D4, and these linear protrusion parts 71 are parallel to each other. Therefore, the total of three linear protrusion parts 71 are also parallel to the base line BL. In the lateral direction of the lens body 41, linear recess parts 72 parallel to the linear protrusion parts 71 are provided between adjacent linear protrusion parts 71. That is, the straight lens part 70 has a total of two linear recess parts 72.

In the lateral direction of the lens body 41 (the vertical direction in FIG. 5), both longitudinal sides of the linear protrusion parts 71 disposed on the outermost side are integrally connected to the protrusion parts 66 disposed at the outermost peripheral portions of the first and fourth Fresnel lens parts 61 and 64. Additionally, in the lateral direction of the lens body 41, both longitudinal sides of the linear protrusion part 71 disposed in the middle are integrally connected to the protrusion part 66 disposed as the second one toward the radially inward side from the protrusion parts 66 disposed at the outermost peripheral portions of the first to fourth Fresnel lens parts 61~64. Furthermore, in the lateral direction of the lens body 41, both longitudinal sides of the linear protrusion part 71 disposed on the innermost side are integrally connected to the protrusion part 66 disposed as the third one toward the radially inward side from the protrusion parts 66 disposed at the outermost peripheral portions of the first to fourth Fresnel lens parts 61~64.

That is, as shown in FIG. 5, the total of six linear protrusion parts 71 disposed on both lateral sides of the lens body 41 and the total of six protrusion parts 66 disposed on both longitudinal sides of the lens body 41 are integrally connected to each other, thereby forming a total of three oval-shaped protrusion parts like a running track.

By disposing the straight lens parts 70 on both lateral sides of the lens body 41 as described above, as shown in FIG. 5, both sides of the second and third Fresnel lens parts 62 and 63 along the lateral direction of the lens body 41 are in a state of being cut out by the width dimension W of the straight lens parts 70. Also, in the first and fourth Fresnel lens parts 61 and 64, portions on both sides along the lateral direction of the lens body 41 and closer to the second and third Fresnel lens parts 62 and 63 are also in a cut-out state.

### <Regarding Light Emission State of Lens>

Next, the light emission state of the winker lamp 10 (lens 40) formed as described above will be described in detail using the drawings.

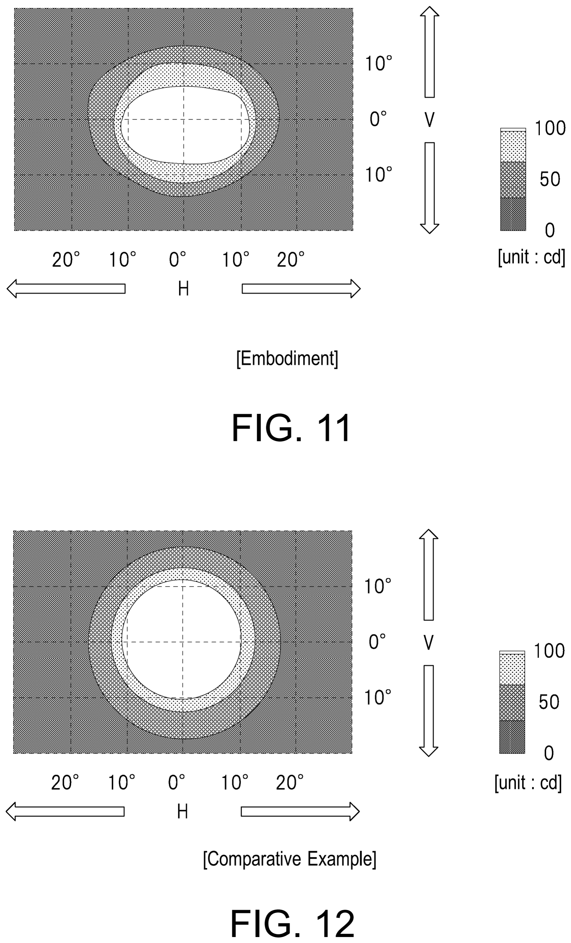

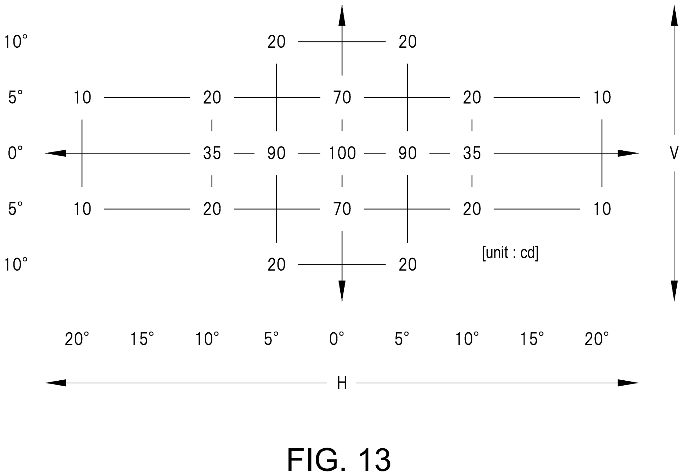

FIG. 10 shows image data indicating the light emission state of the lens, FIG. 11 shows a diagram indicating the light distribution state of [embodiment], FIG. 12 shows a diagram indicating the light distribution state of [comparative example], and FIG. 13 shows a diagram indicating the photometric property defined by the United Nations rule.

Up on causing the first to fourth light sources D1~D4 (see FIG. 8) mounted on the substrate 50 to emit light, the light from the first to fourth light sources D1~D4 follows the paths indicated by the dashed arrows OP1 to OP5 in FIG. 7 and FIG. 9 and passes through the lens 40.

First, the light emission state in the lateral direction of the lens body 41 will be described using FIG. 7.

First, the light from the first to fourth light sources D1~D4 is incident into the interior of the lens body 41 from the lens central part 65 of the first to fourth Fresnel lens parts 61~64, as indicated by the dashed arrow OP1. Thereafter, the light that has passed through the interior of the lens body 41 is emitted in the vertical direction of the lens body 41, as indicated by the dashed arrow OP1. Therefore, as shown in FIG. 10, the brightness of the lens central part 65 in the first to fourth Fresnel lens parts 61~64 becomes high.

Here, FIG. 7 is an enlarged view of the dashed circle D part in FIG. 6, and FIG. 7 shows only the second light source D2 and the second Fresnel lens part 62. As shown in FIG. 10, the light emission states of the first, third, and fourth Fresnel lens parts 61, 63, and 64 in the lateral direction of the lens body 41 are also substantially the same light emission states as the second Fresnel lens part 62.

Second, the light from the first to fourth light sources D1~D4 is incident into the interior of the lens body 41 with refraction from the protrusion parts 66 of the first to fourth Fresnel lens parts 61~64, as indicated by the dashed arrow OP2. Thereafter, as indicated by the dashed arrow OP2, the light passes through the interior of the lens body 41 and is emitted to the exterior of the lens 40 so as to be parallel to the dashed arrow OP1. Therefore, as shown in FIG. 10, the brightness of the portions (portions indicated by arrow a) corresponding to the protrusion parts 66 in the lateral direction of the lens body 41 becomes high substantially the same as the lens central part 65 of the first to fourth Fresnel lens parts 61~64.

Third, the light from the first to fourth light sources D1~D4 is incident into the interior of the lens body 41 with refraction from the bottom parts of the recess parts 67 of the first to fourth Fresnel lens parts 61~64, as indicated by the dashed arrow OP3. Thereafter, as indicated by the dashed arrow OP3, the light undergoes total reflection inside the lens body 41 and is emitted to the exterior of the lens 40 from the lens sidewall 42. Therefore, as shown in FIG. 10, the brightness of the portions (portions indicated by arrow b) corresponding to the recess parts 67 in the lateral direction of the lens body 41 becomes lower than the brightness of the portions (portions indicated by arrow a) corresponding to the protrusion parts 66.

Fourth, the light from the first to fourth light sources D1~D4 is incident into the interior of the lens body 41 with refraction from the linear protrusion parts 71 of the straight lens part 70, as indicated by the dashed arrow OP4. Thereafter, as indicated by the dashed arrow OP4, the light undergoes total reflection inside the linear protrusion parts 71, passes through the interior of the lens body 41, and is emitted to the exterior of the lens 40 so as to be parallel to the dashed arrow OP1. Therefore, as shown in FIG. 10, the brightness of the portions (arrow c) corresponding to the linear protrusion parts 71 in the lateral direction of the lens body 41 becomes substantially as high as the brightness of the portions (portions indicated by arrow a) corresponding to the protrusion parts 66.

In the lateral direction of the lens body 41, due to the relationship between the positions of the first to fourth light sources D1~D4 and the positions of the linear recess parts 72, as shown in FIG. 7, the light from the first to fourth light sources D1~D4 does not reach the bottom parts of the linear recess parts 72. Therefore, as shown in FIG. 10, the brightness of the portions (portions indicated by arrow d) corresponding to the linear recess parts 72 in the lateral direction of the lens body 41 becomes substantially as low as the brightness of the portions (portions indicated by arrow b) corresponding to the recess parts 67.

Here, among the light from the first to fourth light sources D1~D4 that is incident on the linear protrusion parts 71, the light incident from a direction orthogonal to the extending direction of the linear protrusion parts 71 follows the path indicated by the dashed arrow OP4 in FIG. 7 and is emitted to the exterior of the lens 40 so as to be parallel to the dashed arrow OP1. In contrast, the light incident on the linear protrusion parts 71 at an angle inclined with respect to both the extending direction of the linear protrusion parts 71 and the direction orthogonal to the extending direction advances in the extending direction of the linear protrusion parts 71 while undergoing total reflection inside the linear protrusion parts 71.

More specifically, as indicated by the thick dashed arrow AR in FIG. 5, the light incident on the linear protrusion parts 71 at an angle inclined with respect to both the extending direction of the linear protrusion parts 71 and the direction orthogonal to the extending direction repeatedly undergoes total reflection inside the linear protrusion parts 71, is bent multiple times, and advances in the extending direction of the linear protrusion parts 71. Thereafter, the light incident on the linear protrusion parts 71 is emitted toward the exterior of the lens 40 at a predetermined inclination angle in the middle of the linear protrusion parts 71. Therefore, as shown in FIG. 10, according to the case of viewing the lens 40 from the front, the light emitted toward the exterior of the lens 40 at a predetermined inclination angle (the light that advanced in the extending direction of the linear protrusion parts 71) does not reach the eyes.

Therefore, in the pair of straight lens parts 70, the brightness of the low brightness parts LB (6 locations in total) surrounded by the dashed ellipses in FIG. 10 becomes low. Specifically, in FIG. 10, in the pair of straight lens parts 70, the brightness becomes low at 2 upper and lower locations between the first Fresnel lens part 61 and the second Fresnel lens part 62, at 2 upper and lower locations between the second Fresnel lens part 62 and the third Fresnel lens part 63, and at 2 upper and lower locations between the third Fresnel lens part 63 and the fourth Fresnel lens part 64.

Here, the light emission state in the longitudinal direction of the lens body 41 is similarly emitted for the same reason as described above. That is, as shown in FIG. 9, the light from the first to fourth light sources D1~D4 that is incident on the interior of the lens body 41 from the lens central part 65 and the protrusion parts 66 passes through the lens body 41 as indicated by the dashed arrows OP1 and OP2, and is emitted to the exterior thereof. Therefore, as shown in FIG. 10, in the longitudinal direction of the lens body 41, the brightness of the portions corresponding to the lens central parts 65 and the protrusion parts 66 of the first to fourth Fresnel lens parts 61~64 becomes high.

Here, FIG. 9 is an enlarged view of the dashed circle F portion in FIG. 8, and FIG. 9 shows only the first light source D1 and the first Fresnel lens part 61. As shown in FIG. 10, the light emission states of the second to fourth Fresnel lens parts 62 to 64 in the longitudinal direction of the lens body 41 are also substantially similar light emission states to the first Fresnel lens part 61.

Also, as shown in FIG. 9, the light from the first to fourth light sources D1~D4 that is incident on the interior of the lens body 41 from the bottom of the recess parts 67 passes through the lens body 41 while undergoing total reflection as indicated by the dashed arrow OP5, and is emitted from the lens body 41 toward the vehicle width direction outer side (left side in the figure). Therefore, as shown in FIG. 10, in the longitudinal direction of the lens body 41, the brightness of the portions corresponding to the recess parts 67 of the first to fourth Fresnel lens parts 61~64 becomes lower than the brightness of the portions corresponding to the protrusion parts 66.

Next, the light distribution state of the winker lamp 10 of the present embodiment was verified in accordance with the United Nations rule (UN standard). The results are shown in FIG. 11.

The United Nations rule defines "photometric standards" as shown in FIG. 13. FIG. 13 shows the irradiation range (angle: °) and luminous intensity distribution (candela: cd) in the case of installing a wall (irradiation target) at a specified distance in front of the winker lamp (turning signal indicator) and illuminating the wall. Specifically, in the case of setting the brightest part at the central portion of FIG. 13 as a reference value "100", for example, it is specified that the luminous intensity is changed from "90" to "35" in a range of 10° in the horizontal direction (H), and the luminous intensity is changed from "70" to "20" in a range of 10° in the vertical direction (V).

As shown in FIG. 11, in the winker lamp 10 of the present embodiment, a horizontally elongated substantially elliptical shape light distribution state that has spread in the horizontal direction (H) and is flat in the vertical direction (V) is achieved, and it was found that the "photometric standard" defined by the United Nations rule is satisfied. This is because, as shown in FIG. 10, by providing the pair of straight lens parts 70, the brightness is made lower than other portions at two upper and lower locations between the first Fresnel lens part 61 and the second Fresnel lens part 62, two upper and lower locations between the second Fresnel lens part 62 and the third Fresnel lens part 63, and two upper and lower locations between the third Fresnel lens part 63 and the fourth Fresnel lens part 64 (a total of six low brightness parts LB).

To confirm the verification results, a comparative example was prepared in which the pair of straight lens parts 70 (see FIG. 5) were omitted, that is, only the first to fourth Fresnel lens parts 61~64 were arranged in the longitudinal direction of the lens body 41, and the light distribution state thereof was examined. As a result, as shown in FIG. 12, in the winker lamp of the comparative example (not shown), the light distribution state became substantially circular with similar spread in both the horizontal direction (H) and the vertical direction (V). That is, it was found that the comparative example in which the pair of straight lens parts 70 were omitted does not satisfy the "photometric standard" defined by the United Nations rule.

As described in detail above, according to the present embodiment, the disclosure includes a substrate 50 on which a linear array of first to fourth light sources D1~D4 are mounted, and a lens 40 having an opposing surface 41a that faces the first to fourth light sources D1~D4, wherein the opposing surface 41a has first to fourth Fresnel lens parts 61~64 that face the respective first to fourth light sources D1~D4, and a straight lens part 70 is provided to extend across the first to fourth Fresnel lens parts 61~64, and the straight lens part 70 is disposed on both sides of a base line BL that passes through the centers of the first to fourth Fresnel lens parts 61~64, with the base line BL as a center.

Thereby, in the longitudinal direction of the lens 40, low brightness parts LB (a total of six locations) having lower brightness than other portions can be provided between the first Fresnel lens part 61 and the second Fresnel lens part 62, between the second Fresnel lens part 62 and the third Fresnel lens part 63, and between the third Fresnel lens part 63 and the fourth Fresnel lens part 64. Therefore, the light emission direction can be controlled without enlarging the lens 40 in the longitudinal direction, and a horizontally elongated substantially elliptical shape light distribution property that has spread in the horizontal direction (H) and is flat in the vertical direction (V) can be obtained. Consequently, it becomes possible to easily comply with automotive regulations such as the United Nations rule (UN standard).

Also, according to the present embodiment, the straight lens part 70 includes linear protrusion parts 71 that protrude from the opposing surface 41a toward the first to fourth light sources D1~D4. Further, the straight lens part 70 includes a total of three linear protrusion parts 71 arranged parallel to each other, and linear recess parts 72 (a total of two) are provided between adjacent linear protrusion parts 71.

Thereby, without complicating the shape of the lens 40, by simply providing simple linear irregularities, low brightness parts LB (see FIG. 10) having reduced brightness can be formed between adjacent first to fourth Fresnel lens parts 61~64 in the longitudinal direction of the lens 40. Therefore, the shape of a mold (not shown) for molding the lens 40 can be simplified, and consequently, it becomes possible to achieve longer life of the mold.

Further, according to the present embodiment, the straight lens part 70 is provided to extend from the first Fresnel lens part 61 on a furthest end of one side to the fourth Fresnel lens part 64 on a furthest end of the other side in the arrangement direction of the first to fourth Fresnel lens parts 61~64.

Thereby, multiple low brightness parts LB can be provided in the longitudinal direction (vehicle width direction) of the lens 40. Therefore, it becomes possible to more reliably obtain horizontally elongated substantially elliptical light distribution properties that have spread in the horizontal direction (H) and are flattened in the vertical direction (V).

Further, according to the present embodiment, the winker lamp 10 can be realized in accordance with the United Nations rule (UN standard), which is one of the automotive regulations in the world. Therefore, it becomes possible to adopt in a wide range of countries regardless of domestic or overseas, and it becomes possible to achieve commonality of parts. Therefore, manufacturing energy can be saved, and consequently, it becomes possible to realize especially Goal 7 (ensure access to affordable, reliable, sustainable and modern energy for all) and Goal 13 (take urgent action to combat climate change and its impacts) in the Sustainable Development Goals (SDGs) established by the United Nations.

The disclosure is not limited to the above-described embodiment, and it goes without saying that various modifications can be made without departing from the gist thereof. For example, in the above-described embodiment, a pair of straight lens parts 70 are provided, and these straight lens parts 70 are provided to extend across the first to fourth Fresnel lens parts 61~64, but the disclosure is not limited thereto. For example, according to the specifications of the light sources (number, brightness, etc.) to be adopted, either one of the straight lens parts 70 can be omitted, or the length dimension of the straight lens part 70 can be shortened, for example, being provided to extend across the adjacent second Fresnel lens part 62 and third Fresnel lens part 63. Furthermore, the numbers of the linear protrusion parts 71 and linear recess parts 72 can also be set arbitrarily.

Further, in the above-described embodiment, the pair of straight lens parts 70 are arranged to be parallel to each other with the base line BL passing through the center of each of the first to fourth Fresnel lens parts 61~64 as the center, but the disclosure is not limited thereto, and according to the design of the lens 40, for example, they can be arranged inclined to each other so that the vehicle width direction outer side (left side in FIG. 5) becomes tapered. Furthermore, the vehicle controller CU may cause the first to fourth light sources D1~D4 to blink at respective predetermined timings to form a sequential lighting type (so-called sequential type) winker lamp 10.

Further, in the above-described embodiment, the winker lamp 10 applied to a motorcycle is shown, but the disclosure is not limited thereto, and can be applied to other vehicles such as small mobility vehicles capable of traveling on public roads. Moreover, the disclosure can be applied not only to the winker lamp 10 but also to rear brake lamps and the like.

In addition, the materials, shapes, dimensions, numbers, installation locations, and the like of each component in the above-described embodiment are arbitrary as long as they can achieve the disclosure, and are not limited to the above-described embodiment.

### [Reference Signs List]

10: winker lamp (vehicle lighting fixture)
20: housing
30: housing body
31: housing bottom wall
31a: substrate support column
31b: screw fixing column
31c: wiring holding post
32: housing side wall
32a: fixed cylinder part
32b: wiring insertion hole
33: opening part
40: lens (lens member)
41: lens body
41a: opposing surface
42: lens sidewall
50: substrate
51: mounting surface
52: screw insertion hole
53: through hole
61: first Fresnel lens part (Fresnel lens part)
62: second Fresnel lens part (Fresnel lens part)
63: third Fresnel lens part (Fresnel lens part)
64: fourth Fresnel lens part (Fresnel lens part)
65: lens central part
66: protrusion part
67: recess part
70: straight lens part
71: linear protrusion part
72: linear recess part
BL: base line
CU: vehicle controller
D1: first light source (light source)
D2: second light source (light source)
D3: third light source (light source)
D4: fourth light source (light source)
GM: grommet
LB: low brightness part
LN: wiring
SC: fixation screw
SM: support member

## Claims

1. A vehicle lighting fixture (10), comprising:
a substrate (50), mounting a linear array of a plurality of light sources (D1~D4); and
a lens member (40), having an opposing surface (41a) facing the light sources, wherein
the opposing surface (41a) comprises:
a plurality of Fresnel lens parts (61~64), each of the Fresnel lens parts faces a respective light source of the plurality of light sources; and
a straight lens part (70), the straight lens part (70) is provided to extend across at least an adjacent pair of the Fresnel lens parts among the plurality of Fresnel lens parts, wherein
the straight lens part (70) is disposed on at least one side of a base line (BL), with the base line (BL) passing through centers of the plurality of Fresnel lens parts as a center.

2. The vehicle lighting fixture (10) according to claim 1, wherein
the straight lens part (70) comprises a linear protrusion part (71), and the linear protrusion part (71) protrudes from the opposing surface (41a) toward the light sources.

3. The vehicle lighting fixture (10) according to claim 2, wherein
the straight lens part (70) has a plurality of the linear protrusion parts (71), the plurality of the linear protrusion parts (71) are disposed parallel to each other, and a linear recess part (72) is provided between the linear protrusion parts (71) being adjacent.

4. The vehicle lighting fixture (10) according to any one of claims 1 to 3, wherein
the straight lens part (70) is provided to extend from a furthest end of one side of the Fresnel lens part to a furthest end of an other side of the Fresnel lens part in an arrangement direction of the plurality of Fresnel lens parts.

5. The vehicle lighting fixture (10) according to claim 1, wherein
the straight lens part (70) is disposed on both sides of the base line (BL) with the base line (BL) as a center.
